# EUROPEAN PATENT APPLICATION

(11) **EP 4 668 367 A1**
(43) Date of publication of application: **24.12.2025**
(21) Application number: 24756900.7
(22) Date of filing: 14.02.2024
(51) Int. Cl.: H01M 4/62, H01G 11/30, H01G 11/38, H01G 11/86, H01M 4/13, H01M 4/139, H01M 4/1391, H01M 4/525

(54) **METHOD FOR PRODUCING ELECTRODE, ELECTRODE, AND NON-AQUEOUS ELECTROLYTE SECONDARY BATTERY**

(30) Priority: 17.02.2023 JP 2023023421
(71) Applicant: Panasonic Intellectual Property Management Co., Ltd., Kadoma-shi, Osaka 571-0057 (JP)
(72) Inventor: IZUMI, Reiko, Kadoma-shi, Osaka 571-0057 (JP); YAMASHITA, Hiroki, Kadoma-shi, Osaka 571-0057 (JP)
(74) Representative: Eisenführ Speiser
(86) International application number: PCT/JP2024/004965
(87) International publication number: WO 2024/172059

(57) **Abstract**

The present invention provides a method for producing an electrode with which it is possible to obtain a mixture sheet exhibiting good stretchability.

This method for producing an electrode (10) is characterized by including a mixture sheet preparation step in which a powder (20) of an electrode mixture including an active material and a fibrous binder and having a solid content concentration of substantially 100% is molded into a sheet shape to prepare a mixture sheet (12), and a bonding step in which the mixture sheet (12) is bonded to the surface of a core material (11), wherein the binder contains polytetrafluoroethylene having an internal friction angle of 45 degrees or more as a main component.

## Description

### TECHNICAL FIELD

The present disclosure relates to a method for producing an electrode, an electrode, and a non-aqueous electrolyte secondary battery including the electrode.

### BACKGROUND

An electrode of a non-aqueous electrolyte secondary battery such as a lithium ion secondary battery is generally prepared by a wet method in which an electrode mixture slurry containing an active material, a binder, and the like is applied to a surface of a core material which is a metal foil, and the applied film is dried and compressed. In this case, there is a problem that migration in which the binder moves during the drying of the applied film is likely to occur. When the migration of the binder occurs, the amount of the binder increases on the surface side of the applied film (electrode mixture layer) rather than on the core material side, and the distribution of the binder in the thickness direction of the electrode mixture layer is biased.

In recent years, a dry method has been studied in which a mixture sheet is prepared by stretching a powder of an electrode mixture to form a sheet shape, and the sheet is bonded to a core material to produce an electrode. Patent Literature 1 discloses an electrode mixture sheet prepared by mixing an active material, a binder which can be fibrillated, such as polytetrafluoroethylene (PTFE), and a conductive agent using a mill, and fibrillating the PTFE.

### CITATION LIST

### PATENT LITERATURE

Patent Literature 1: JP 2019-512872 A

### SUMMARY

Meanwhile, when a mixture sheet is prepared by a dry method, the mixture sheet is required to have good stretchability. If the stretchability of the sheet is poor, for example, the productivity of an electrode may be reduced, or the strength of the electrode in its thickness direction may be reduced.

Therefore, an object of the present disclosure is to provide a method for producing an electrode, in which a mixture sheet exhibiting good stretchability can be obtained.

A method for producing an electrode according to the present disclosure includes a mixture sheet preparation step of molding a powder of an electrode mixture containing an active material and a fibrous binder and having a solid content of substantially 100% into a sheet shape to prepare a mixture sheet, and a bonding step of bonding the mixture sheet to a surface of a core material, wherein the binder contains polytetrafluoroethylene having an internal friction angle of greater than or equal to 45 degrees as a main component.

An electrode according to the present disclosure includes a core material and a mixture sheet bonded to a surface of the core material, wherein the mixture sheet contains an active material and a fibrous binder, and the binder contains polytetrafluoroethylene having an internal friction angle of greater than or equal to 45 degrees as a main component.

A non-aqueous electrolyte secondary battery according to the present disclosure includes the electrode. The configuration of the electrode is preferably applied to a positive electrode.

According to the method for producing an electrode according to the present disclosure, it is possible to provide an electrode including a mixture sheet exhibiting good stretchability.

### BRIEF DESCRIPTION OF DRAWINGS

FIG. 1 is a cross-sectional view of an electrode as an example of an embodiment.
FIG. 2 is a diagram illustrating a step of preparing an electrode mixture and a step of preparing a mixture sheet from the electrode mixture.
FIG. 3 is a diagram illustrating a step of bonding the mixture sheet to a surface of a core material.

### DESCRIPTION OF EMBODIMENTS

Hereinafter, embodiments of an electrode according to the present disclosure will be described in detail. The embodiments described below are merely examples, and the present disclosure is not limited to the following embodiments. The drawings referred to in the description of the embodiments are schematically illustrated, and dimensional ratios and the like of components drawn in the drawings should be determined in consideration of the following description. Note that the present disclosure includes a configuration obtained by selectively combining a plurality of embodiments and modifications to be described below.

The electrode and a method for producing the electrode according to the present disclosure are suitable for non-aqueous electrolyte secondary batteries such as a lithium ion secondary battery, but can also be applied to a battery containing an aqueous electrolyte or a power storage device such as a capacitor. An electrode for non-aqueous electrolyte secondary batteries will be described below as an example. The configuration and method of production of the electrode for non-aqueous electrolyte secondary batteries according to the present disclosure may be applied to a negative electrode, but are particularly preferably applied to a positive electrode. A non-aqueous electrolyte secondary battery includes an electrode assembly including a positive electrode and a negative electrode, and a non-aqueous electrolyte. The non-aqueous electrolyte contains, for example, a non-aqueous solvent and a lithium salt dissolved in the non-aqueous solvent.

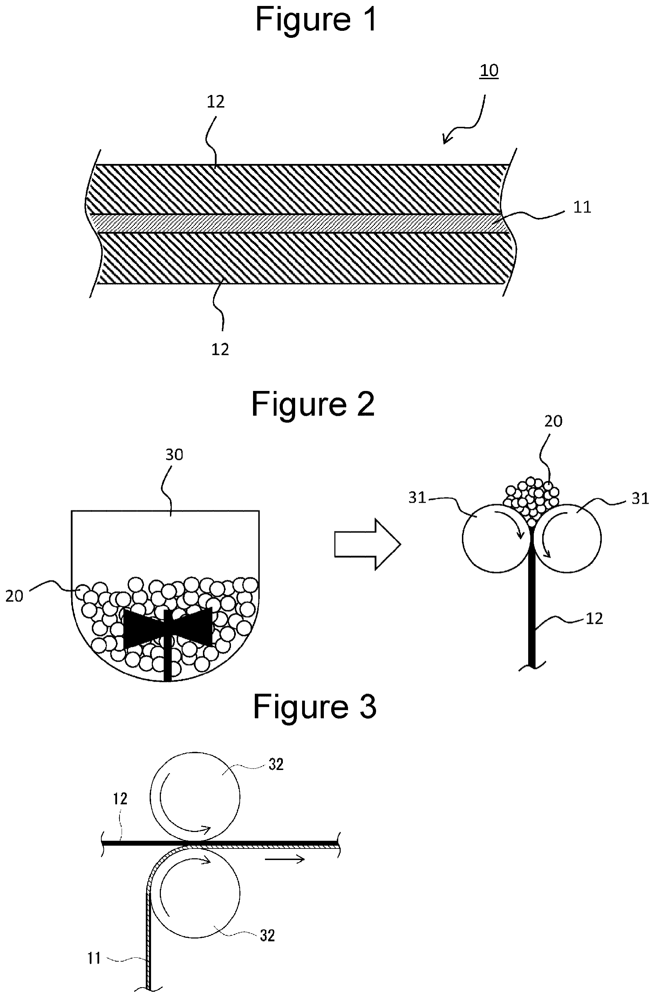

FIG. 1 is a cross-sectional view of an electrode as an example of an embodiment. As illustrated in FIG. 1, the electrode 10 includes a core material 11 and a mixture sheet 12 bonded to a surface of the core material 11. The mixture sheet 12 is preferably bonded to both surfaces of the core material 11. The mixture sheet 12 is prepared by molding a powder of an electrode mixture described later into a sheet shape, and is bonded to the core material 11 to constitute an electrode mixture layer. The electrode 10 may be an elongated electrode constituting a wound electrode assembly or may be a rectangular electrode constituting a laminated electrode assembly.

As the core material 11, a metal foil, a film having a metal layer formed on a surface of the film, or the like can be used. The core material 11 has a thickness of, for example, greater than or equal to 5 µm and less than or equal to 20 µm. In a case where the electrode 10 is a positive electrode, for example, a metal foil such as aluminum or an aluminum alloy can be used for the core material 11. In a case where the electrode 10 is a negative electrode, for example, a metal foil such as copper or a copper alloy can be used for the core material 11.

The mixture sheet 12 contains an active material and a fibrous binder. The mixture sheet 12 applied to the non-aqueous electrolyte secondary battery has a thickness of, for example, greater than or equal to 50 µm and less than or equal to 150 µm, preferably greater than or equal to 80 µm and less than or equal to 140 µm, and more preferably greater than or equal to 100 µm and less than or equal to 130 µm.

The mixture sheet 12 may further include a conductive agent. In particular, in a case where the mixture sheet 12 constitutes a positive electrode mixture layer, the mixture sheet 12 preferably contains a conductive agent. Examples of the conductive agent included in the mixture sheet 12 include carbon materials such as carbon black such as acetylene black and Ketjenblack, carbon nanotubes (CNTs), and graphite. In a case where the electrode 10 is a positive electrode, a preferred example of the content of the conductive agent in the mixture sheet 12 is greater than or equal to 0.2% by mass and less than or equal to 5.0% by mass.

As the active material of the positive electrode, a lithium transition metal composite oxide is generally used. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among them, it is preferable to contain at least one type selected from Ni, Co, and Mn. In particular, as the composition of the lithium transition metal composite oxide, the ratio of Ni to a metal element other than lithium is preferably greater than or equal to 70% and less than or equal to 99%, and more preferably greater than or equal to 80% and less than or equal to 95%. The content of the positive electrode active material is preferably greater than or equal to 85% by mass and less than or equal to 99% by mass, and more preferably greater than or equal to 90% by mass and less than or equal to 99% by mass based on the mass of the mixture sheet 12 (the preferred content of the negative electrode active material is also the same as the content of the positive electrode active material).

The positive electrode active material contains, for example, secondary particles formed by aggregation of a plurality of primary particles. The volume-based median diameter (D50) of the positive electrode active material is preferably greater than or equal to 3 µm and less than or equal to 30 µm. D50 means a particle diameter in which a cumulative frequency in a volume-based particle size distribution is 50% from the smallest particle size, and is also referred to as a median diameter. The particle size distribution of the positive electrode active material can be measured by a laser diffraction type particle size distribution measuring apparatus (for example, MT3000II manufactured by MicrotracBEL Corp.) using water as a dispersion medium.

As the active material of the negative electrode, for example, a carbon-based active material such as natural graphite such as flake graphite, massive graphite, or earthy graphite, or artificial graphite such as massive artificial graphite (MAG) or graphitized mesophase-carbon microbeads (MCMB) is used. As the negative electrode active material, an active material containing Si, Sn, or the like and to be alloyed with lithium may be used.

The fibrous binder contains polytetrafluoroethylene having an internal friction angle of greater than or equal to 45 degrees as a main component. The fibrous binder is prepared, for example, by using, as a raw material, a particulate binder containing polytetrafluoroethylene as a main component and fibrillating the particulate binder. In the present specification, the main component means a component having the highest mass ratio.

Incidentally, an electrode has a problem of increasing the strength of an electrode mixture in the thickness direction of the electrode. By increasing the strength of the electrode mixture in the thickness direction of the electrode, for example, it may be possible to suppress damage to a mixture sheet caused by stress applied to the electrode in the preparation of a wound electrode assembly. In a method for producing the electrode 10 according to the present embodiment to be described later, the mixture sheet 12 is prepared by a method in which a powder of an electrode mixture containing a solid content of substantially 100% is formed into a sheet shape. The method is a so-called dry method. Since the fibrous binder containing polytetrafluoroethylene having an internal friction angle of greater than or equal to 45 degrees as a main component is contained in the powder of the electrode mixture, the mixture sheet 12 having good stretchability is obtained, and the strength of the electrode mixture in the thickness direction of the electrode 10 is increased. That is, the electrode 10 according to the present embodiment includes the mixture sheet 12 containing the fibrous binder containing polytetrafluoroethylene having an internal friction angle of greater than or equal to 45 degrees as a main component, and thus has high strength in terms of the strength of the electrode mixture in the thickness direction of the electrode 10.

When a positive electrode active material that contains Ni with a content of greater than or equal to 70% with respect to a metal element other than Li and in which the content of Co, which is a factor of an increase in the cost of the positive electrode active material, is reduced is used, the strength of the mixture sheet of the positive electrode and the strength of the electrode mixture in the thickness direction of the positive electrode are often not sufficiently obtained. However, since the mixture sheet contains the fibrous binder containing polytetrafluoroethylene having an internal friction angle of greater than or equal to 45 degrees as a main component, the strength of the mixture sheet of the positive electrode and the strength of the mixture sheet in the thickness direction of the positive electrode are sufficiently obtained. Therefore, when a positive active material containing Ni with a content of greater than or equal to 70% is used, the use of polytetrafluoroethylene having an internal friction angle of greater than or equal to 45 degrees is extremely effective.

A method for adjusting the internal friction angle of polytetrafluoroethylene is not particularly limited, but examples of the method include a method for imparting at least one of a branched structure (also referred to as a branch structure), a crosslinked structure, and modification to polytetrafluoroethylene since the internal friction angle is easily adjusted to an angle of greater than or equal to 45 degrees. The branched structure is a structure having a side chain branched from a main chain. A method for imparting the branched structure to a polytetrafluoroethylene molecule is not particularly limited, and examples of the method include a method in which PTFE particles or fibrillated fibrous PTFE as a raw material is irradiated with an electron beam or radiation. The crosslinked structure is a structure in which polytetrafluoroethylene molecules are crosslinked. For example, by adding a crosslinking agent at the time of synthesis of polytetrafluoroethylene, the crosslinked structure can be imparted to polytetrafluoroethylene molecules. The modification refers to copolymerization of tetrafluoroethylene and another monomer.

The internal friction angle of polytetrafluoroethylene may be greater than or equal to 45 degrees, but is preferably greater than or equal to 47 degrees, and more preferably greater than or equal to 50 degrees and less than or equal to 70 degrees from the viewpoint of further improving the stretchability of the mixture sheet 12 and further improving the strength of the electrode mixture in the thickness direction of the electrode 10.

The internal friction angle of polytetrafluoroethylene is measured by the following procedure using, for example, a commercially available powder layer shearing force measuring apparatus NS-S500 (manufactured by Nano Seeds Corporation).
(1) 10 g of a sample (polytetrafluoroethylene) is introduced into a columnar cell (upper fixed cell, lower movable cell) having an inner diameter of 15 mm, and a pestle is lowered to apply a load such that the vertical load on the upper surface is 50 N, whereby a compacted powder layer is formed.
(2) The position of the pestle is fixed, and the lower movable cell is moved in the horizontal direction while the volume of the compacted powder layer is maintained. After the shear stress is maximized and stabilized, the lower movable cell is lowered downward to gradually reduce the shear stress until the shear stress is minimized. The shear stress is plotted against the bottom load normal stress detected at the lower part of the cell to obtain a powder yield locus (PYL curve).
(3) In the powder yield locus, a straight line is obtained by a least squares method from a curve extending from a limit point at which the shear stress is maximized to a point at which the shear stress is minimized at the end of the measurement.
(4) The inclination of the obtained straight line is an internal friction coefficient tanθ of the sample (polytetrafluoroethylene), and the internal friction angle θ is calculated from tanθ.

The content of the fibrous binder is, for example, preferably greater than or equal to 0.1 parts by mass and less than or equal to 5.0 parts by mass, more preferably greater than or equal to 0.2 parts by mass and less than or equal to 3 parts by mass, and particularly preferably greater than or equal to 0.3 parts by mass and less than or equal to 2 parts by mass, based on 100 parts by mass of the active material, from the viewpoint of further improving the stretchability of the mixture sheet 12 and further improving the strength in the thickness direction of the electrode 10. The binder has a crystallite size of, for example, greater than or equal to 20 nm and less than or equal to 45 nm. The crystallite size of the binder is determined by X-ray diffraction measurement.

When the mixture sheet 12 is divided into three equal portions in the thickness direction to form a first region, a second region, and a third region from the core material 11 side, the content (a) of the binder 22 in the first region, the content (b) of the binder 22 in the second region, and the content (c) of the binder 22 in the third region preferably satisfy (c - a) / (a + b + c) ≤ ±10%, and more preferably satisfy (c - a) / (a + b + c) ≤ ±5%. According to the method for producing the electrode 10 according to the present embodiment described later, uneven distribution of the binder in a portion of the mixture sheet 12 is suppressed, and the binder can be substantially uniformly present in the entire mixture sheet 12, so that the above-described expressions can be satisfied with respect to the contents (a), (b), and (c) of the binder.

The density of the mixture sheet 12 is not particularly limited, but is preferably greater than or equal to 2.5 g/cc and less than or equal to 4.5 g/cc, more preferably greater than or equal to 3.0 g/cc and less than or equal to 4.2 g/cc, and particularly preferably greater than or equal to 3.0 g/cc and less than or equal to 4.0 g/cc in a case where the mixture sheet 12 constitutes a positive electrode mixture layer. The electrode 10 may include an intermediate layer interposed between the core material 11 and the mixture sheet 12. The intermediate layer contains, for example, a conductive agent and a binder, and may improve the bonding strength of the mixture sheet 12 to the core material 11 and reduce interface resistance.

The method for producing the electrode 10 will be described with reference to FIGS. 2 and 3. A method for producing a positive electrode will be exemplified below, but this production method can be applied to production of a negative electrode. FIG. 2 illustrates a step of preparing an electrode mixture and a step of preparing a mixture sheet from the electrode mixture, and FIG. 3 illustrates a step of bonding the mixture sheet to a core material.

The electrode 10 is produced through the following steps.
(1) An electrode mixture preparation step of preparing a powder of an electrode mixture containing an active material and a fibrous binder and having a solid content of substantially 100%
(2) A mixture sheet preparation step of forming the powder of the electrode mixture into a sheet shape to prepare the mixture sheet 12
(3) A bonding step of bonding the mixture sheet 12 to the surface of the core material 11

### (Electrode Mixture Preparation Step)

A powder 20 of an electrode mixture illustrated in FIG. 2 is obtained, for example, by stirring and mixing raw materials such as an active material, a particulate binder, and a conductive agent by using a mixer 30. The powder 20 of the electrode mixture has a solid content of substantially 100%. The particulate binder in the raw materials is fibrillated to be a fibrous binder by being stirred and mixed by the mixer 30. The content (that is, the content of the particulate binder) of the fibrous binder is as described above.

The particulate binder used in the first step contains polytetrafluoroethylene (PTFE) as a main component. The particulate binder may contain a component other than PTFE such as polyvinylidene fluoride (PVdF) as long as the object of the present disclosure is not impaired, but may substantially contain only PTFE. The average particle size of the particulate binder is not particularly limited, but is preferably greater than or equal to 100 µm and less than or equal to 500 µm, and more preferably greater than or equal to 200 µm and less than or equal to 400 µm. The average particle size of the particulate binder can be determined by observing PTFE particles with a scanning electron microscope (SEM). Specifically, 100 randomly selected particles are extracted, the diameters of the circumscribed circles of the 100 particles are measured, and the measured values are averaged to obtain the average.

Polytetrafluoroethylene as a main component of the binder is polytetrafluoroethylene having an internal friction angle of greater than or equal to 45 degrees as described above. For example, when the binder is irradiated with an electron beam or radiation to make the internal friction angle of polytetrafluoroethylene greater than or equal to 45 degrees, the particulate binder may be irradiated with an electron beam or radiation, or the fibrous binder after fibrillation may be irradiated with an electron beam or radiation. In any case, the internal friction angle of polytetrafluoroethylene contained in the powder 20 of the electrode mixture obtained in the electrode mixture preparation step may be greater than or equal to 45 degrees.

As the mixer 30, a conventionally known mechanical stirring mixer capable of applying a mechanical shear force can be used. Specific examples of the mixer 30 include a cutter mill (such as Wonder Crusher manufactured by OSAKA CHEMICAL Co., Ltd.), a pin mill, a bead mill, kneading machines (a kneader, a Banbury mixer, and the like), a planetary mixer, and a fine particle composing machine (a device in which a shear force is generated between a rotor having a special shape and configured to rotate at high speed inside a tank and a collision plate).

A period of time (period of time for applying a shear force to the mixture raw material) for the mixing by the mixer 30 varies depending on the type of the mixer 30 and the like, but is preferably within several minutes, and is, for example, longer than or equal to 0.5 minutes and shorter than or equal to 10 minutes. The mixing by the mixer 30 may include a step of mixing the active material and the conductive agent, and a step of mixing the mixture of the active material and the conductive material and the binder.

A mechanofusion method may be used for dry mixing of the active material and the conductive agent. By applying the mechanofusion method, the bonding force of the conductive agent to the particle surface of the active material is increased. Examples of a mechanofusion reactor include Nobilta (registered trademark) and MECHANO FUSION (registered trademark) manufactured by HOSOKAWA MICRON CORPORATION, a hybridization system manufactured by Nara Machinery Co., Ltd., BALANCE GRAN manufactured by FREUND-TURBO CORPORATION, and COMPOSI manufactured by Nippon Coke & Engineering Co., Ltd..

By stirring and mixing the raw materials by using the mixer 30, the powder 20 of the electrode mixture that contains the active material and the fibrous binder containing polytetrafluoroethylene having an internal frictional angle of greater than or equal to 45 degrees as a main component and has a solid content of substantially 100% is obtained. The powder 20 of the electrode mixture obtained by the mixer 30 may be used for preparing the mixture sheet 12, but the powder 20 of the electrode mixture obtained by the mixer 30 may be supplied to a pair of rolls (not illustrated) and formed into a sheet to promote fibrillation of PTFE. Specifically, the powder 20 of the electrode mixture is supplied to a gap formed between the pair of rolls, and is rolled by the pair of rolls and formed into a sheet. By supplying the powder 20 of the electrode mixture to the pair of rolls to form a sheet, a particulate binder that is not fibrillated can be fibrillated in the electrode mixture. The obtained sheet of the electrode mixture is pulverized by, for example, a pulverizer or the like and returned to the powder 20 of the electrode mixture. As the pulverizer, a conventionally known pulverizer is used.

### (Mixture Sheet Preparation Step)

In the mixture sheet preparation step, the mixture sheet 12 is prepared by a dry method using the powder 20 of the electrode mixture obtained in the electrode mixture preparation step.

In the mixture sheet preparation step, as illustrated in FIG. 2, the powder 20 of the electrode mixture is supplied to a pair of rolls 31 and passes through a gap formed between the pair of rolls 31 so as to be rolled to prepare the positive electrode mixture sheet 12. Note that the rotation axes of the rolls illustrated in FIG. 2 are parallel, and arrows drawn on the rolls indicate the rotation directions of the rolls.

The thickness of the mixture sheet 12 can be controlled based on, for example, the gap between the rolls, the peripheral speeds of the rolls, the number of times of passing through the rolls, and the like. In the mixture sheet preparation step, the powder 20 of the electrode mixture may be formed into a sheet shape using rolls having peripheral speed ratio different by greater than or equal to 2 times. By making the peripheral speed ratio of the rolls different, the thinning of the mixture sheet 12 is facilitated, and the productivity is improved. In the mixture sheet preparation step, the mixture sheet 12 may be lastly compressed. The linear pressure in this case is, for example, greater than or equal to 1 t/cm and less than or equal to 3 t/cm.

### (Bonding Step)

For bonding of the mixture sheet 12 to the core material 11, for example, a pair of rolls 32 illustrated in FIG. 3 is used. When the mixture sheet 12 and the core material 11 pass between the pair of rolls 32, the electrode 10 in which the mixture sheet 12 is bonded to the surface of the core material 11 is obtained. In FIG. 3, the mixture sheet 12 is bonded to only one surface of the core material 11, but may be bonded to both surfaces of the core material 11. In this case, two mixture sheets 12 may be simultaneously bonded to both surfaces of the core material 11, or after the first mixture sheet 12 is bonded to one surface of the core material 11, and the second mixture sheet 12 may be bonded to the other surface of the core material 11.

At least one of the pair of rolls 32 may be heated. The temperatures of these rolls are preferably from room temperature to 300°C, and more preferably from room temperature to 200°C. The linear pressure between the pair of rolls 32 is, for example, greater than or equal to 0.1 t/cm and less than or equal to 2 t/cm. An intermediate layer such as an adhesive layer may be formed on both surfaces of the core material 11 to be subjected to the bonding step.

The electrode 12 thus obtained may be subjected to a compression step as necessary. Specifically, the electrode 12 may be conveyed to a predetermined gap provided between a pair of opposing rolls, and compressed by the gap. The linear pressure between the pair of rolls compressing the electrode 12 is, for example, greater than or equal to 1 t/cm and less than or equal to 3 t/cm.

As in the method for producing the electrode 10 according to the present embodiment, the mixture sheet 12 having good stretchability is obtained since the fibrous binder containing polytetrafluoroethylene having an internal friction angle of greater than or equal to 45 degrees as a main component is contained in the powder of the electrode mixture to be used in production of the mixture sheet 12 by a dry method and having a solid content of substantially 100%, and the strength of the electrode mixture in the thickness direction of the electrode 10 is increased.

### [Examples]

The present disclosure will be further explained below with reference to Examples. However, the present disclosure is not limited to these Examples.

### <Example 1>

### [Preparation of Positive Electrode Mixture Sheet]

By using NOB300 Nobilta (registered trademark) manufactured by HOSOKAWA MICRON CORPORATION, 1000 g of a lithium transition metal composite oxide which is a positive electrode active material having a Ni content of 89% and 10 g of carbon black were mixed for 5 minutes to prepare a carbon-coated positive electrode active material in which the carbon black was attached to the particle surface of the positive electrode active material. The carbon-coated positive electrode active material and PTFE particles (manufactured by AGC Inc., CD097) having an internal friction angle of 47.3 degrees were introduced at a mass ratio of 101:0.8 into Wonder Crusher manufactured by OSAKA CHEMICAL Co., Ltd., and mixed at room temperature and the number of revolutions of scale 3 for 2 minutes. Note that the rotational speed of Wonder Crusher is a maximum of 28000 rpm at scale 10.

The mixture subjected to the mixing treatment was rolled and formed into a sheet by a pair of opposing rolls, and then the formed sheet was pulverized by a pulverizer. By the treatment, the PTFE particles were fibrillated to form fibrous PTFE, and a positive electrode mixture in which the carbon-coated positive electrode active material and the fibrous PTFE were uniformly dispersed was obtained. The obtained positive electrode mixture was a powder having a solid content of 100%.

The powder of the positive electrode mixture was rolled by the pair of rolls 31 illustrated in FIG. 2 and formed into a sheet shape to prepare a positive electrode mixture sheet. The peripheral speed ratio of the pair of rolls 31 in this case was set to 1:1, and the linear pressure between the pair of rolls 31 was set to 0.1 t/cm. The tensile strength of the obtained positive electrode mixture sheet subjected to the first roll rolling was evaluated. The mixture sheet obtained in the first roll rolling was stretched by the pair of rolls 31 to prepare a stretched positive electrode mixture sheet. The peripheral speed ratio of the pair of rolls 31 in this case was set to 1:2, the linear pressure between the pair of rolls 31 was set to 0.5 t/cm, and the gap between the pair of rolls 31 was set to half the film thickness of the positive electrode mixture sheet before the stretching, and the stretchability in this case was evaluated. Finally, the obtained positive electrode mixture sheet was passed between the two rolls at room temperature and repeatedly stretched until an arbitrary film thickness was reached to obtain a positive electrode mixture sheet to be used for a positive electrode.

The stretchability of the positive electrode mixture sheet obtained in the first roll rolling on the pair of rolls 31 was evaluated based on the following criteria. The results are shown in Table 1.
∘: The sheet is not broken during the formation of the powder of the positive electrode mixture into a sheet shape.
×: The sheet is broken during the formation of the powder of the positive electrode mixture into a sheet shape.

In addition, the tensile strength of the positive electrode mixture sheet obtained in the first roll rolling was measured. The tensile strength was measured under the condition of a tensile speed of 2 cm/min using a universal tester with a transverse tensile jig. The results of the tensile strength are shown in Table 1.

### [Preparation of Positive Electrode]

As illustrated in FIG. 3, the positive electrode mixture sheet and the core material were pressed (linear pressure: 1 t/cm) by the pair of opposing rolls 32 to obtain a positive electrode in which the positive electrode mixture sheet was bonded to both surfaces of the core material. When the positive electrode mixture sheet (positive electrode mixture layer) was divided into three equal portions in the thickness direction to form a first region, a second region, and a third region from the core material side, the content (a) of fibrous PTFE in the first region, the content (b) of fibrous PTFE in the second region, and the content (c) of fibrous PTFE in the third region satisfied (c - a) × 100/(a + b + c) = 0.01 (1%).

### <Example 2>

A positive electrode mixture sheet and a positive electrode were prepared in the same manner as in Example 1 except that PTFE particles (DF681, manufactured by Solvay) having an internal friction angle of 46.5 degrees were used instead of the PTFE particles having an internal friction angle of 47.3 degrees in the preparation of the positive electrode mixture sheet. Then, in the same manner as in Example 1, the stretchability of the positive electrode mixture sheet was evaluated, and the tensile strength of the positive electrode mixture sheet was measured. The results are shown in Table 1.

### <Example 3>

A positive electrode mixture sheet and a positive electrode were prepared in the same manner as in Example 1 except that PTFE particles (208, manufactured by DAIKIN INDUSTRIES, LTD.) having an internal friction angle of 46.0 degrees were used instead of the PTFE particles having an internal friction angle of 47.3 degrees in the preparation of the positive electrode mixture sheet. Then, in the same manner as in Example 1, the stretchability of the positive electrode mixture sheet was evaluated, and the tensile strength of the positive electrode mixture sheet was measured. The results are shown in Table 1.

### <Example 4>

A positive electrode mixture sheet and a positive electrode were prepared in the same manner as in Example 1 except that PTFE particles (JF4DE1201, manufactured by Juhua) having an internal friction angle of 49.7 degrees were used instead of the PTFE particles having an internal friction angle of 47.3 degrees in the preparation of the positive electrode mixture sheet. Then, in the same manner as in Example 1, the stretchability of the positive electrode mixture sheet was evaluated, and the tensile strength of the positive electrode mixture sheet was measured. The results are shown in Table 1.

In Example 4, the strength of the positive electrode mixture in the thickness direction of the positive electrode was measured by the following method. A positive electrode was attached onto an acrylic plate of 120 mm × 30 mm with a double-sided tape interposed therebetween to prepare a measurement sample. By using a tacking tester (TACII) manufactured by RHESCA CO., LTD., a measurement probe having a diameter of 2 mm and having the double-sided tape attached to the surface of the measurement sample fixed flat was pressed at 400 gf for 10 seconds, and then the measurement probe was raised upward at a speed of 600 mm/min to measure the strength when the positive electrode mixture was peeled off. This measured value was taken as the strength of the positive electrode mixture in the thickness direction of the positive electrode.

### <Example 5>

A positive electrode mixture sheet and a positive electrode were prepared in the same manner as in Example 1 except that PTFE particles (640, manufactured by Chemers Corporation) having an internal friction angle of 51.4 degrees were used instead of the PTFE particles having an internal friction angle of 47.3 degrees in the preparation of the positive electrode mixture sheet. Then, in the same manner as in Example 1, the stretchability of the positive electrode mixture sheet was evaluated, and the tensile strength of the positive electrode mixture sheet was measured. The results are shown in Table 1.

### <Example 6>

A positive electrode mixture sheet and a positive electrode were prepared in the same manner as in Example 1 except that PTFE particles (TF2073Z, manufactured by 3M Company) having an internal friction angle of 51.9 degrees were used instead of the PTFE particles having an internal friction angle of 47.3 degrees in the preparation of the positive electrode mixture sheet. Then, in the same manner as in Example 1, the stretchability of the positive electrode mixture sheet was evaluated, and the tensile strength of the positive electrode mixture sheet was measured. In addition, the strength of the positive electrode mixture in the thickness direction of the positive electrode was measured in the same manner as in Example 4. The results are shown in Table 1.

### <Comparative Example 1>

A positive electrode mixture sheet and a positive electrode were prepared in the same manner as in Example 1 except that PTFE particles (CD123E, manufactured by AGC Inc.) having an internal friction angle of 41.5 degrees were used instead of the PTFE particles having an internal friction angle of 47.3 degrees in the preparation of the positive electrode mixture sheet. Then, the stretchability of the positive electrode mixture sheet was evaluated in the same manner as in Example 1. In addition, the strength of the positive electrode mixture in the thickness direction of the positive electrode was measured in the same manner as in Example 4. The results are shown in Table 1.

### <Comparative Example 2>

A positive electrode mixture sheet and a positive electrode were prepared in the same manner as in Example 1 except that PTFE particles (TF2035Z, manufactured by 3M Company) having an internal friction angle of 42.9 degrees were used instead of the PTFE particles having an internal friction angle of 47.3 degrees in the preparation of the positive electrode mixture sheet. Then, the stretchability of the positive electrode mixture sheet was evaluated in the same manner as in Example 1. The results are shown in Table 1.

### <Comparative Example 3>

A positive electrode mixture sheet and a positive electrode were prepared in the same manner as in Example 1 except that PTFE particles (GN7040, manufactured by GFL) having an internal friction angle of 43.1 degrees were used instead of the PTFE particles having an internal friction angle of 47.3 degrees in the preparation of the positive electrode mixture sheet. Then, the stretchability of the positive electrode mixture sheet was evaluated in the same manner as in Example 1. The results are shown in Table 1.

**[Table 1]**

| | PTFE | Evaluation of positive electrode mixture sheet | | Evaluation of positive electrode |
|---|---|---|---|---|
| | Internal friction angle (degrees) | Stretchability | Tensile strength of sheet (MPa) | Strength (gf) of positive electrode mixture in thickness direction of positive electrode |
| Example 1 | 47.3 | ○ | 0.007 | - |
| Example 2 | 46.5 | ○ | 0.008 | - |
| Example 3 | 46.0 | ○ | 0.009 | - |
| Example 4 | 49.7 | ○ | 0.009 | 354.2 |
| Example 5 | 51.4 | ○ | 0.010 | - |
| Example 6 | 51.9 | ○ | 0.011 | 363.5 |
| Comparative Example 1 | 41.5 | × | - | 221.7 |
| Comparative Example 2 | 42.9 | × | - | - |
| Comparative Example 3 | 43.1 | × | - | - |

As shown in Table 1, in each of Examples, the stretchability of the positive electrode mixture sheet was good. On the other hand, in each of Comparative Examples, the positive electrode mixture sheet was broken, and the stretchability was not good. From these results, it can be said that when a fibrous binder containing polytetrafluoroethylene having an internal friction angle of greater than or equal to 45 degrees as a main component is used as the binder contained in the powder of the electrode mixture to be used for preparation of the mixture sheet by the dry method, a mixture sheet exhibiting good stretchability can be obtained. In addition, the strength of the positive electrode mixture in the thickness direction of the positive electrode was higher in each of Examples 4 and 6 than in Comparative Example 1. From these results, it can be said that since the mixture sheet contains a fibrous binder containing polytetrafluoroethylene having an internal friction angle of greater than or equal to 45 degrees as a main component, the strength of the electrode mixture in the thickness direction of the electrode can be improved.

Regarding the tensile strength of the mixture sheet, as can be seen from the results of Examples 1 to 6, the tensile strength of the mixture sheet was improved as the internal friction angle of polytetrafluoroethylene was increased.

### [Supplementary Notes]

### Configuration 1:

A method for producing an electrode, including:
a mixture sheet preparation step of molding a powder of an electrode mixture containing an active material and a fibrous binder and having a solid content of substantially 100% into a sheet shape to prepare a mixture sheet; and
a bonding step of bonding the mixture sheet to a surface of a core material, wherein
the binder contains polytetrafluoroethylene having an internal friction angle of greater than or equal to 45 degrees as a main component.

### Configuration 2:

The method for producing an electrode according to configuration 1, wherein when the mixture sheet bonded to the surface of the core material is divided into three equal portions in a thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

### Configuration 3:

The method for producing an electrode according to configuration 1 or 2, wherein a content of the binder is greater than or equal to 0.1 parts by mass and less than or equal to 5.0 parts by mass based on 100 parts by mass of the active material.

### Configuration 4:

The method for producing an electrode according to any one of configurations 1 to 3, wherein the active material is a positive electrode active material, and a ratio of Ni to a metal element other than lithium in the positive electrode active material is greater than or equal to 70%.

### Configuration 5:

An electrode including: a core material; and a mixture sheet bonded to a surface of the core material, wherein
the mixture sheet contains an active material and a fibrous binder, and
the binder contains polytetrafluoroethylene having an internal friction angle of greater than or equal to 45 degrees.

### Configuration 6:

The electrode according to configuration 5, wherein when the mixture sheet is divided into three equal portions in a thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

### Configuration 7:

The electrode according to configuration 5 or 6, wherein a content of the binder is greater than or equal to 0.1 parts by mass and less than or equal to 5.0 parts by mass based on 100 parts by mass of the active material.

### Configuration 8:

A non-aqueous electrolyte secondary battery including the electrode according to any one of configurations 5 to 7.

### REFERENCE SIGNS LIST

- 10: Electrode
- 11: Core material
- 12: Mixture sheet
- 20: Powder of electrode mixture
- 30: Mixer
- 31: Roll
- 40: First roll
- 41: Second roll
- 42: Third roll
- 43: Fourth roll
- 44: Fifth roll
- 45: Sixth roll
- 46: Seventh roll
- 47: Eighth roll

## Claims

1. A method for producing an electrode, comprising:
a mixture sheet preparation step of molding a powder of an electrode mixture containing an active material and a fibrous binder and having a solid content of substantially 100% into a sheet shape to prepare a mixture sheet; and
a bonding step of bonding the mixture sheet to a surface of a core material, wherein
the binder contains polytetrafluoroethylene having an internal friction angle of greater than or equal to 45 degrees as a main component.

2. The method for producing an electrode according to claim 1, wherein when the mixture sheet bonded to the surface of the core material is divided into three equal portions in a thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

3. The method for producing an electrode according to claim 1 or 2, wherein a content of the binder is greater than or equal to 0.1 parts by mass and less than or equal to 5.0 parts by mass based on 100 parts by mass of the active material.

4. The method for producing an electrode according to claim 1 or 2, wherein the active material is a positive electrode active material, and a ratio of Ni to a metal element other than lithium in the positive electrode active material is greater than or equal to 70%.

5. An electrode comprising: a core material; and a mixture sheet bonded to a surface of the core material, wherein
the mixture sheet contains an active material and a fibrous binder, and
the binder contains polytetrafluoroethylene having an internal friction angle of greater than or equal to 45 degrees.

6. The electrode according to claim 5, wherein when the mixture sheet is divided into three equal portions in a thickness direction to form a first region, a second region, and a third region from the core material side, a content (a) of the binder in the first region, a content (b) of the binder in the second region, and a content (c) of the binder in the third region satisfy (c - a)/(a + b + c) ≤ ±10%.

7. The electrode according to claim 5 or 6, wherein a content of the binder is greater than or equal to 0.1 parts by mass and less than or equal to 5.0 parts by mass based on 100 parts by mass of the active material.

8. A non-aqueous electrolyte secondary battery comprising the electrode according to claim 5 or 6.
